# EUROPEAN PATENT APPLICATION

(11) **EP 2 479 998 A1**
(43) Date of publication of application: **25.07.2012**
(21) Application number: 11305061.1
(22) Date of filing: 21.01.2011
(51) Int. Cl.: H04N 13/00, G06T 7/00

(54) **Method and system for aligning cameras**

(71) Applicant: Thomson Licensing, 92130 Issy-les-Moulineaux (FR)
(72) Inventor: Winter, Marco, 30659, Hannover (DE)
(74) Representative: Schiller, Harald

(57) **Abstract**

The present invention relates to method (700) for collinearly aligning focal points of multiple cameras, comprising directing (704) a first light plane to hit a scenery in a first bright shape, and directing (704) a second light plane to hit a scenery in a second bright shape. The method further includes bringing (706) the first light plane into a position where a first camera captures the first bright shape as a first straight line and a second camera captures the first bright shape as a second straight line, and bringing (708) the second light plane, not coplanar with the first light plane, into a position where the first camera captures the second bright shape as a third straight line and the second camera captures the second bright shape as a fourth straight line. This is followed by aligning (710) a third camera into a position relative to the first camera and the second camera such that the third camera captures the first bright shape as a fifth straight line and the second bright shape as a sixth straight line.

## Description

The present invention relates to the field of optical systems. In particular, exemplary embodiments of the present invention relate to a method and system for aligning multiple cameras.

Stereoscopic imaging or three-dimensional imaging, referred to as 3-D imaging herein, are techniques capable of recording 3-D visual information or creating the illusion of depth in an image. The illusion of depth in a photograph, movie, or other two-dimensional, referred to as 2-D herein, image is created by presenting to a viewer images which appear slightly different to each of the viewer's eye. Further, by obtaining two adjacent images of an object, i.e., one left image relative to the object and one right image relative to the object, 3-D depth information can be extracted from the two images by known techniques known as depth estimation.

For an efficient analysis of two or more camera views of a scenery, like depth estimation, it is helpful to transform given raw images captured by the cameras into images that are "rectified". This known technical term is understood in the field to denote images which can be placed side by side to each other in such a way, that parallel lines drawn through both images meet identical object points of the captured scenery in both images. In general, having rectified image pairs is a very helpful starting point for any kind of 3-D image pair analysis, like depth estimation, object segmentation, or scene analysis. In many cases, assuming input image pairs to be rectified, allows to considerably simplify the contributing algorithms.

For the case of two images, i.e. a single image pair as captured by a camera pair looking at a scenery, it is known that image rectification can be achieved by identifying few key points in both images, and evaluating their positions. The evaluation yields parameters of a geometric transform to be applied to at least one of the raw images of the image pair, by which the desired rectified image pair is obtained.

In the case of more than two camera views, i.e. for rectifying image sets of more than two images, such key point analysis is not enough, and has to be supplemented with the additional assumption that the focal points of the participating cameras all be aligned to lie on one straight line in 3-D space.

The focal point of a camera generally is situated somewhere within the physical encasing of the camera. Those skilled in the art will easily appreciate that the task of aligning the focal points of three or more cameras becomes non-trivial if cameras of different make or model are to be aligned. Even for cameras of identical build, the presence of a zoom lens may make focal point alignment difficult.

Currently, known alignment of multi-camera setups is based on capturing known reference objects of suitable design and accurately known dimensions, or by having a scene with simply detectable key points. However, this has imperfections because the evaluation results depend on illumination quality, or reflectivity and shape of object surfaces. In the end, this means that the scene has a strong influence on the quality of the image rectification.

A publication in the Proceeding of the Third International Symposium on 3D Data Processing, Visualization, and Transmission, 0-7695-2825-2/06, to Furukawa et al., entitled "Self-calibration of Multiple Laser Planes for 3D Scene Reconstruction," purports to disclose a self-calibrating active vision system using line lasers and a camera. The reference further purports to disclose defining an estimation of multiple laser planes from curves produced by laser reflections as observed from a sequence of images captured by the camera. The method further discloses computing approximated solutions of the equations by using Gr¨obner bases. Also provided is a 3D measurement system for using the above proposed method. The system includes a laser projector having two line lasers and a single camera. In implementing the above method, the projector can be moved freely so that the projected lines sweep across the surface of the scene to achieve a 3D shape.

According to known methods, a user may acquire images of a particular object, typically a board having specific patterns. In addition, for achieving proper analysis, the type and/or size of the board is typically chosen in accordance with the optical system at hand. This yet, may further complicate the image analysis as it requires preparation and prior knowledge of the optical system used, as well as requiring a multitude of boards for accommodating the various types of optical systems. Still further, because the image analysis generally requires the board to encompass the entire field of view, such boards may typically be too large for handling and/or inconvenient for transfer.

A method and system for quick and easy focal point alignment of multiple cameras is therefore desirable.

A method for collinearly aligning focal points of multiple cameras is set forth in claim 1. Accordingly, the method includes directing a first light plane to hit a non-flat scenery in a first bright shape, as well as directing a second light plane, non-co-planar with the first light plane, to hit the scenery in a second bright shape. The non-flat scenery can in the minimum be embodied as an object comprising two parts with an abrupt depth transition between them, so that the two parts can be considered as a foreground part and a background part. The foreground part can for instance be a simple broomstick, whereas an existing wall of a room can serve as the background part. Another example is a surface that extends in width and height direction, and is undulating in the depth direction.

The method further includes bringing the first light plane into a position where a first camera captures the first bright shape as a first straight line and a second camera captures the first bright shape as a second straight line. Such positioning of the first light plane ensures that a complete plane co-planar with the first light plane intersects the focal points of the first camera and the second camera, with other words, that the focal points of the first and second camera both lie on the complete plane that is co-planar with the first light plane.

Further, the method includes bringing the second light plane into a position not co-planar with the first light plane, where the first camera captures the second bright shape as a third straight line and the second camera captures the second bright shape as a fourth straight line. Correspondingly, such positioning of the second light plane ensures that a complete plane co-planar with the second light plane intersects the focal points of the first camera and the second camera, with other words, that the focal points of the first and second camera both lie on the complete plane that is co-planar with the second light plane.

After such positioning of the first light plane and the second light plane, because of being not co-planar, they are guaranteed to intersect, at least if extrapolated into complete planes, in a straight intersection line situated somewhere in 3-D space.

Alternatively to positioning a first and second light plane relative to fixed first and second cameras, the same state of adjustment can also be achieved by positioning the first and second camera relative to fixed and non-co-planar first and second light planes. Being able to freely choose the position and orientation may be more important for the cameras in some contexts, and more important for the light planes in others.

In the end of both approaches, the first and second camera and the first and second light planes are in an adjusted position relative to each other.

This is then followed by a step of aligning a third camera into a position relative to the first camera and the second camera, such that the third camera captures the first bright shape as a fifth straight line and the second bright shape as a sixth straight line. Correspondingly, such positioning of the third camera ensures that the complete plane co-planar with the first light plane as well as the complete plane co-planar with the second light plane intersect also at the focal point of the third camera. With other words, it ensures that the focal points of the first, second and third camera all lie on the complete plane that is co-planar with the first light plane as well as on the complete plane that is co-planar with the second light plane. In consequence, it ensures that the focal points of the first, second and third camera all lie on the intersection line as defined by the intersecting first and second light planes.

In one exemplary embodiment, a method of the present invention further includes forming the scenery to be comprised of a grid that is positioned in front of a background, and wherein the first bright shape and the second bright shape each comprises bright spots on the grid and a curve on the background. In addition, each of the above steps of capturing a respective bright shape as a straight line comprises capturing the bright spots of the respective bright shape as coinciding with the curve of the respective bright shape. With other words, in this situation, the curve of the respective bright shape is captured by the respective camera as a straight line.

In another exemplary embodiment, a system for collinearly aligning focal points of multiple cameras is provided. Accordingly, the system includes a first light source generating a first light plane hitting a non-flat scenery in a first bright shape. The system also includes a second light source, arranged at a distance from the first light source. The second light source is adapted to generate a second light plane that is not co-planar with the first light plane and is hitting the scenery in a second bright shape. Further, the system includes a first, second, and third camera arranged to capture the scenery, at least a part of the first bright shape and at least a part of the second bright shape. In addition, the system includes means for changing the position and orientation of the first light source, means for changing the position and orientation of the second light source, and means for dislocating or aligning the third camera. Alternatively to including means for changing the position and orientation of the first and second light source, the system may include means for changing the position and orientation of the first and second camera.

A preferred embodiment of the present invention is described with reference to the accompanying drawings. The preferred embodiment merely exemplifies the invention. Plural possible modifications are apparent to the skilled person. The gist and scope of the present invention is defined in the appended claims of the present application.
Fig. 1 is a set of two images useful in explaining un-rectified stereo images.
Fig. 2A is a top view of an optical set-up, in accordance with an embodiment of the present invention.
Fig. 2B is a perspective view of an optical set-up similar to that shown in Fig. 2A, in accordance with an embodiment of the present invention.
Fig. 2C is a side view of an optical set up, in accordance with an embodiment of the present invention.
Fig. 2D is a side view of another optical set-up, in accordance with an embodiment of the present invention.
Fig. 3 illustrates images acquired by an optical system, in accordance with an embodiment of the present invention.
Fig. 4 illustrates a 3-D geometrical construction used for explaining the disclosed method and system, in accordance with an embodiment of the present invention.
Fig. 5 illustrates another 3-D geometrical construction used for explaining the disclosed method and system, in accordance with an embodiment of the present invention.
Fig. 6 is a perspective view of an image acquisition system, in accordance with an embodiment of the present invention.
Fig. 7 is a block diagram of a process flow, in accordance with the present invention.

Disclosed embodiments of the present technique relate to a system and method for collinearly aligning focal points of multiple cameras. Accordingly, the method and system described herein can ultimately be used for rectifying, justifying and/or aligning stereo or other images, such as those acquired by multiple cameras adapted for acquiring images of objects or other sceneries from varying perspectives. It should be borne in mind that the terms image rectification, image justification and image alignment may be used herein interchangeably for describing embodiments of the present technique.

Turning to the exemplary embodiments described below, generally there is provided an optical set-up made up of three cameras, each of which is disposed a distance away from a scenery, such as a grid and/or a background screen. The background is disposed behind the grid. The line-of-sight of each of the three cameras is directed towards the scenery. In addition, the system includes two light sources, such as lasers, disposed in close proximity to the cameras. Each of the light sources is adapted to produce a light plane; however, such light planes must not be co-planar. One light source may be disposed vertically above the three cameras and their components, e.g. lenses, while the second light source may be disposed vertically below the three cameras. This is one setup which ensures that the light planes are not co-planar, others exist and are easily identified.

The light sources each adapted to produce a light plane may be embodied as line lasers rotating in such a way as to sweep their beams across the grid and background of the scenery.

Independent of how a light plane is generated, when it hits or impinges on the scenery, it will produce thereon a bright shape, which in general is a 3-dimensional object in 3-dimensional space. If the scenery comprises a grid in front of a background, a light plane hitting such scenery will produce a configuration of bright spots on the grid, and a bright curve on the background, so that the bright shape in this case can be said to comprise the bright spots and the bright curve.

According to the method and systems described herein, two of the cameras disposed away from the background and grid initially acquire images of the two light planes hitting the background and grid, and the relative position and orientation of the cameras and the light planes towards each other is adjusted in such a way that the images display the spots on the grid as coincident with the curves projected over the background. When this coincidence of the respective bright spots and bright curve as captured in the images is achieved for a first bright shape generated by a first light plane as well as for a second bright shape generated by a second light plane, this ensures that the focal points of the first and second camera both lie on the intersection line of the first and second light plane.

Thereafter, the third camera is positioned into place, so that it, too, acquires images of the curves and spots as being coincident across on the background and grid, respectively. At that point, the disclosed geometrical construction of the optical set up ensures that the three focal points of all the cameras are collinear, that is, all the focal points of the three cameras fall along a straight line. Consequently, the alignment of all the focal points of the cameras enables and eases obtaining stereo images having proper rectification.

Hence, the disclosed method and system for collinearly aligning the focal points of multiple cameras can be carried out with high precision and relative ease using simple and relatively inexpensive materials. Moreover, the technical effect of the invention provides a highly versatile and feasible camera focal point alignment system that is transferable, as well as, self adjustable and usable with a large variety of optical systems.

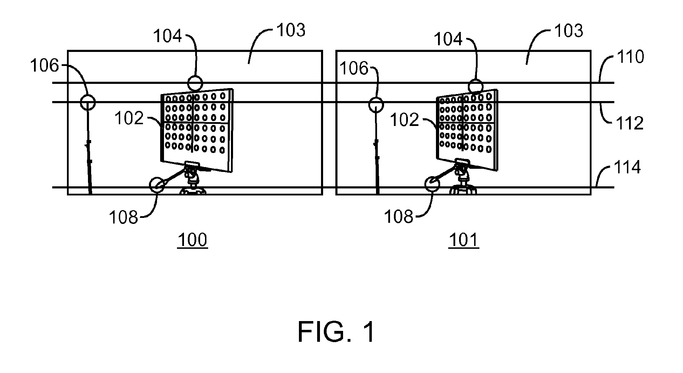

Turning now to the figures, Fig. 1 is a set of two images 100 and 101 useful in explaining un-rectified stereo images. The images 100 and 101 provide a set of stereo images of a specific scenery acquired by two different cameras, each of which providing an image of the scenery from a different perspective. As discussed further below, the images 100 and 101 can be compared with one another for illustrating exemplary features and/or artifacts arising in stereo images, whose rectification and/or justification is lacking or is otherwise absent. While the images 100 and 101 may illustrate only some types of artifacts arising in stereo images, the below described embodiments may be adapted for minimizing and/or entirely eliminating artifacts including but not limited to those described by Fig. 1.

As illustrated by the images 100 and 101, a patterned board 102 is shown in perspective views against a white background 103. Generally, the patterned board 102 may be used for emulating objects, sceneries and/or other types of viewable structures disposed in relation to the neutral background 103. Also illustrated are image reference regions 104, 106 and 108. The reference regions 104-108 are illustrated as circular regions having identical coordinates within real image planes of those optical systems acquiring the images 100 and 101. In other words, the reference regions 104-108 in both of the images 100 and 101 correspond to identical points in real three-dimensional space depicted by the images 100 and 101.

The images 100 and 101 further include reference image lines 110, 112 and 114. The lines 110-114 form parallel straight lines extending throughout both of the images 100 and 101. As illustrated, the lines 110 and 112 extend throughout the top portion of Fig. 1, while the line 114 extends throughout the bottom portion of Fig. 1. Further, the lines 110-114 are drawn throughout the image planes of the images 100 and 101. Thus, the lines 110-114 traverse the two dimensional image planes along identical points within the images 100 and 101. In so doing, the image reference lines 110-114 provide a means for comparing the rendering of 3-D objects in stereo images for evaluating the rectification within stereo images.

For example, while the line 110 crosses the reference region 104 in both of the images 100 and 101, it is clear that the specific point at which the line 110 crosses the region in both of the images is not identical. More specifically, as illustrated in the image 100, the line 110 appears to cross the middle portion of the reference region 104. However, in the image 101, the line 110 grazes the top portion of the reference region 104. Thus, the region 104 is rendered differently in both of the images 100 and 101, indicating that the images 100 and 101 are not properly rectified. By further example, the line 112 crosses the reference region 106 in both of the images 100 and 101. Although less pronounced than the line 110, it is clearly noticeable that the actual points at which the line 112 crosses the image planes at the reference region 106 is not identical in both of the images 100 and 101. This, too, is an indication that the images 100 and 101 are not properly rectified.

Accordingly, the above example depicted by Fig. 1 illustrates the misalignment that could exist between two stereo images depicting objects at slightly different views. Generally, as more cameras are added for acquiring additional stereo images, rectification artifacts may become more pronounced and noticeable to the viewer. While such images may undergo image processing and analysis for correcting justification and/or other types of artifacts, the described below technique achieves proper image alignment of the optical and other elements of the image acquisition system, thereby avoiding the appearance of such artifacts in the images all together. Hence, in what follows is a general technique used for aligning an optical system adapted for acquiring images of an object at different perspectives, such as those used in stereo images.

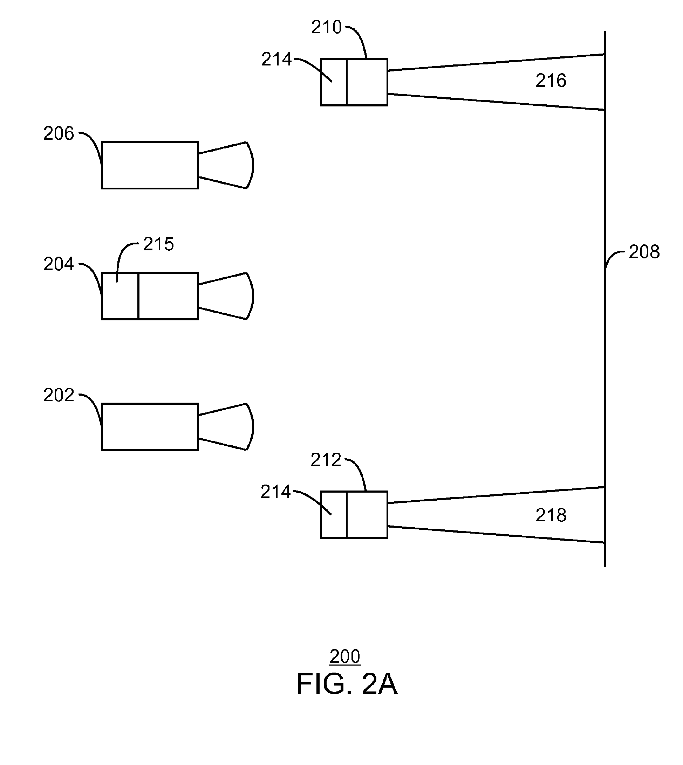

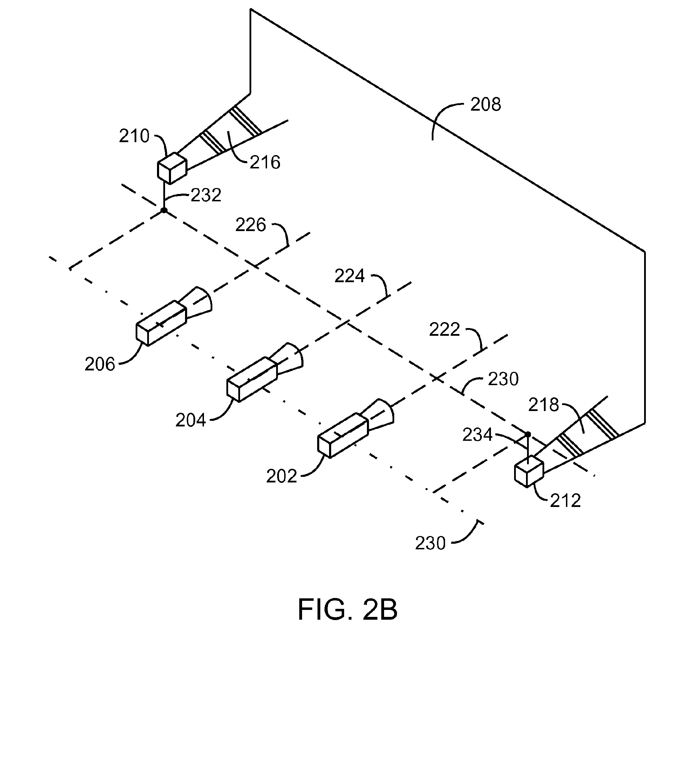

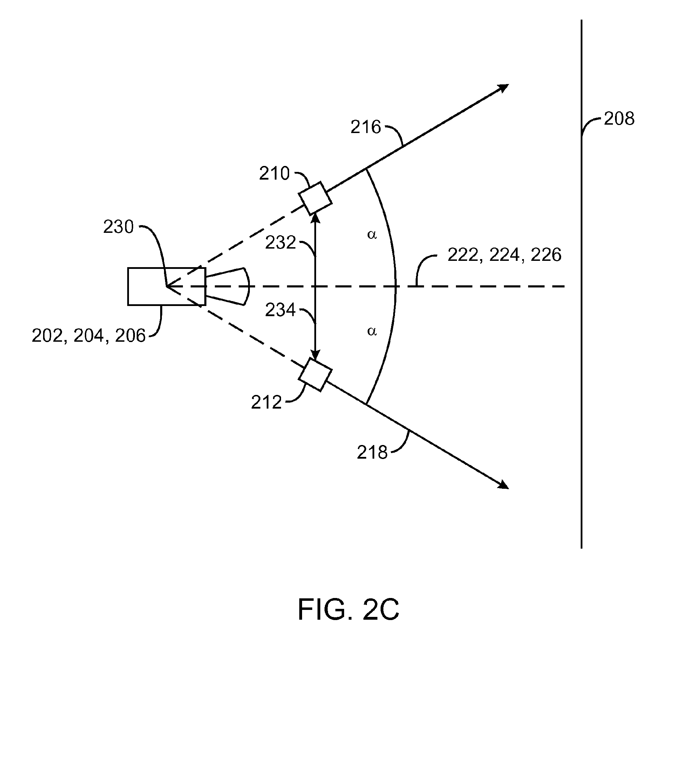

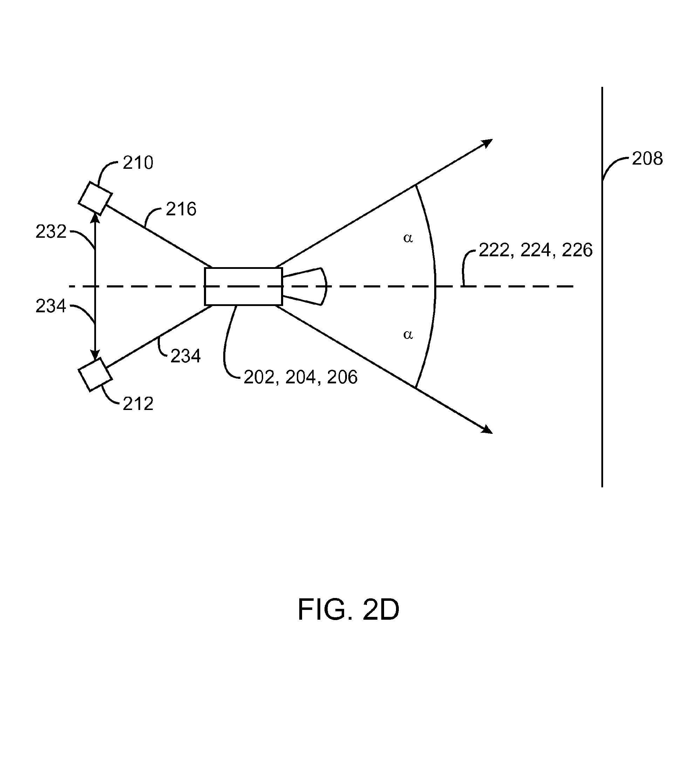

Accordingly, Fig. 2A is a top view of an optical set-up 200, in accordance with an embodiment of the present technique. The optical set-up 200 includes an optical system formed of multiple cameras adapted for acquiring images of one or more objects, wherein each camera is adapted for acquiring images of the one or more objects from a varying perspective. More specifically, the optical set-up 200 includes an optical system formed of three cameras 202, 204, and 206, each disposed relatively adjacent to one another. While generally the cameras 202-206 may comprise various optical, electrical and other elements, those have been omitted from the Fig. 2A, so as to simplify the illustration and the ensuing discussion of the present technique. Thus, it should be borne in mind that when referring to the cameras of the optical set-up 200, reference may generally be made to the actual lenses of the cameras and their focal points. Accordingly, the terms lenses and cameras may be used interchangeably with reference to Fig. 2, as well as with reference to additional below described figures.

As further illustrated by Fig. 2A, the optical set-up 200 includes a scenery 208, which could include a background and a grid, where the background is disposed behind the grid.

As will be discussed further below, the background and the grid are adapted for receiving laser light such that when viewed by the cameras, the laser light falling on the grid forms viewable circular light spots. In addition, the laser light falling on the background may be viewable as straight lines or curves. Further, the grid may generally be disposed in front of and relatively close to the background. The grid in the scenery 208 may be placed between the cameras 202-206 and the background, so that the grid may be fully disposed within the entire fields of view of the aforementioned cameras. As further illustrated, the scenery 208 is disposed so that it, too, falls within the entire fields of view of all of the cameras 202-206. The scenery 208 may generally include a white uniform board, a white screen, or a wall. The scenery 208 generally is non flat such that its surface posses a certain degree of curvature. As will be described further below, the scenery 208 is adapted to provide a projection of a laser light, thus forming bright shapes which can be clearly seen and imaged by the cameras 202-206.

Further, the illustrated embodiment of the optical set-up 200 depicts light sources, i.e. lasers 210 and 212 positioned across one another and in close proximity to the cameras 202-206. The lasers 210 and 212 are positioned relative to the components of the optical set-up 200 in a manner enabling each of the lasers 210 and 212 to be tilted relative to the cameras. Generally, each of the lasers 210 and 212 may be adapted to generate one or more planes of laser light having fan-shaped profiles. The lasers 210 and 212 may include ordinary types of laser, such as those readily accessible for convenient multi-purpose use. Hence, the lasers 210 and 212 may emit red, blue, green or other types of colored light, providing enough brightness to be viewable across the background 210 and grid 208.

Further, each of the lasers 210 and 212 may be coupled to a mount 214, configured to be positioned and secured to a surface, such as a movable platform, table, latch and the like, used for moving the laser for projecting the laser light across the scenery 208. In addition, the camera 204 is coupled to a mount 215 adapted for moving the camera 204. Similar to the mount 214, the mount 215 may form a movable surface having latches, shafts, wheels, pivots and other mechanical structures and contraptions adapted to move the camera 204.

The lasers 210 and 212 are adapted to project wide fan-shaped light planes 216 and 218, respectively, across the scenery 208. Generally, the light planes 216 and 218 form non-co-planar planes, and each of the light planes 216 and 218, when impinging on the scenery 208, forms a respective bright shape thereon. These first and second bright shapes are 3-D objects in 3-D space, each of which is at least partially captured by the cameras 202-206. Such bright shapes will in general be captured by each of the cameras 202-206 into distinct, camera-specific effigies. Accordingly, while there may be only two distinct bright shapes formed by the two light planes 216 and 218, it should be borne in mind that each of the cameras 202-206 captures its own two effigies of them, as perceived from the stand point of each of the cameras 202-206. Hence, because the exemplary of Fig. 2 employs three cameras, there are six distinct effigies captured by the cameras 202-206.
Fig. 2B is a perspective view of an optical set-up similar to that illustrated in Fig. 2A. Hence, the elements shown in Fig. 2B are similar to those shown in Fig. 2A to the extent the cameras 202-206 and light sources 210 are arranged in front of the scenery 208. As illustrated by the present embodiment, the cameras 202-206 are aligned along a base line 230, and both of the light sources 210 and 212 are arranged such that the light planes they emit face at least roughly in the same direction as the line of sights of the cameras 202-206. The line of sights are denoted for cameras 202-206, as lines 222, 224, and 226, respectively. The base line 230, together with the lines of sight 222, 224, 226, span a base plane of the optical set-up. The light source 210 is disposed above the base plane, as symbolically indicated by line 232; and is oriented in such a way that the light plane 216 points upwards relative to the base plane. By contrast, the light source 212 is disposed below the base plane, as symbolically indicated by line 234; and is oriented such that its light plane 218 is directed somewhat downwards from the base plane of the optical set up 200.
Fig. 2C is a side view of the optical set up as shown in Fig. 2B. In this side view, the base line 230 shows as a single point and the base plane coincides with the lines of sight 222, 224, 226 shown as dashed lines. In general, the optical set-up shown in Fig. 2C is similar to the set-up 200 of Fig. 2A and 2B. Fig. 2C illustrates an arrangement where the light sources, e.g. lasers 210 and 212, are arranged close to and slightly in front of the cameras 202, 204, 206. The light source 210 is positioned above the base plane and is oriented such that its light plane 216 is formed upwards. By contrast, the light source 212 is positioned below the base plane and is oriented such that its light plane 218 is directed downwards from the base plane. As further illustrated by Fig. 2C, each of the light planes 216 and 218 spans a wedge of angle alpha with the base plane. Fig. 2C also illustrates, that the light planes emitted by the lasers 210, 212, at least if conceptually generalized into co-planar complete planes, intersect in the baseline 230.
Fig. 2D is a side view of another optical set up, in accordance with another embodiment of the present invention. The optical set up of Fig. 2D is made up of elements similar to those illustrated in the optical set up 200 of Figs, 2A and 2B. in the arrangement shown in Fig. 2D, the light sources, e.g. lasers 210 and 212, are arranged slightly behind the cameras 202-206, i.e., behind the base line 230. In this arrangement, the light source 210 is positioned above the base plane and is oriented such that its light plane 216 is directed downwards, so that the light plane 216 crosses the base plane from above. By contrast, the light source 212 is positioned below the base plane, and is oriented such that its light plane 218 is directed upwards, crossing the base plane from below. As illustrated by Fig. 2D, each of the light planes 216 and 218 spans a wedge having an angle alpha with the base plane.

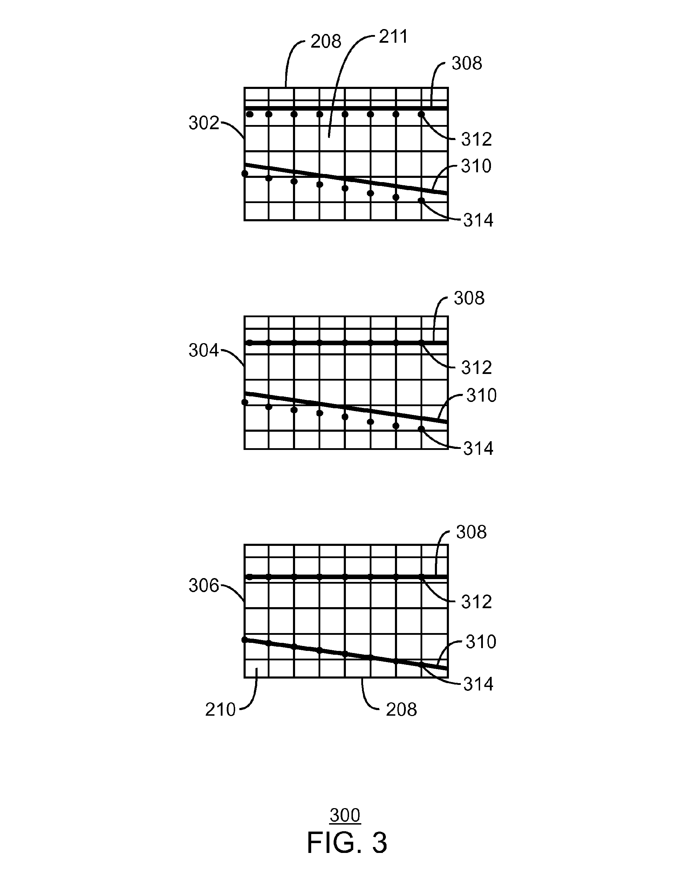

To further illustrate the present technique, Fig. 3 illustrates a collection of images 300 acquired by cameras, such as the cameras 202, 204, 206 of Figs. 2, in accordance with an exemplary embodiment of the present invention. Furthermore, the images depicted by Fig. 3 exemplify the views acquired by the cameras 202-206 in achieving the above discussed alignment and justification of stereo images. It should be borne in mind that the images portrayed by Fig. 3 are exemplary and that other types and/or additional images are attainable by the present technique for generally achieving image adjustment, i.e., rectification, justification, etc.

More specifically, the collection 300 includes three images, namely, images 302, 304 and 306. Further, each of the images 302-306 shows a portion of the above-described exemplary scenery comprising the background and the grid, as seen from the respective camera; and as such it comprises effigies of the bright shapes created on the scenery by the impinging first and second light planes. All the effigies of the bright shapes comprise a configuration of bright spots as arising from the light plane hitting the grid, and a straight line as arising from the light plane hitting the background. In the effigies, some of the bright spots are perceived as coinciding with the associated straight lines, whereas others are perceived as slightly offset of each other. In each of the images 302, 304, 306, the straight line 308, i.e. the effigy of the first light plane hitting the scenery, is shown as traversing the top portion of the image, while the second straight line 310 is shown as traversing the bottom portion of the image. The light planes 216 and 218, hitting the grid 211, form two sets of circular light spots, namely, light spots 312 and light spots 314.

Image 302 of Fig. 3 illustrates a case, in which neither the straight line 308 and associated light spots 312, nor the straight line 310 and associated light spots 314 are perceived as coinciding. This represents a situation, where the focal point of the camera does lie neither on the first light plane nor on the second light plane. By adjusting the relative position and orientation of the capturing camera relative to the two light planes emitted by the light sources 216 and 218, better alignment becomes attainable.

Accordingly, image 304 of Fig. 3 illustrates an effigy, in which the upper straight line 308 appears to coincide with its associated bright spots 312, while the lower straight line 310 is not yet coincident with its associated bright spots 314. This represents a situation, where the focal point of the camera does lie on the first light plane assumed to have generated the upper straight line 308 and bright spots 312, but does not yet lie on the second light plane.

Image 306 of Fig. 3 then illustrates the final alignment. It shows an effigy, in which the upper straight line 308 appears to coincide with its associated bright spots 312, and also the lower straight line 310 appears to coincide with its associated bright spots 314. This represents the final adjustment where the focal point of the camera does lie on the first light plane and also does lie on the second light plane, and hence also lies on the intersection line formed by the two light planes.

The next step will be to perform the adjustment steps as illustrated by the progression from the situation shown in image 302 to image 304 to image 306, for the next (second) camera while maintaining the relative arrangement between the first camera, first light plane and second light plane. Correspondingly, in the final step the third camera can be adjusted into collinearity by only moving that third camera, while maintaining the previously achieved relative arrangement between the first camera, the second camera, the first light plane, and the second light plane. In performing this kind of adjustment for all three cameras of the set-up, the focal points of all the cameras can be made collinear. Consequently, this ensures that images acquired by the cameras 202- 206 appear to be properly justified.

After all adjustments are made, including those made to the light sources 210 and 212, the light planes 216 and 218 - at least when individually extended into complete planes - form a wedge in 3-D space. The wedge has a thick end, i.e. where the light becomes divergent, directed substantially in the same direction as the line of sight of the three cameras 202-206, and it has a cutting edge, i.e. where the light becomes convergent, on which the focal points of the three cameras all coincide.

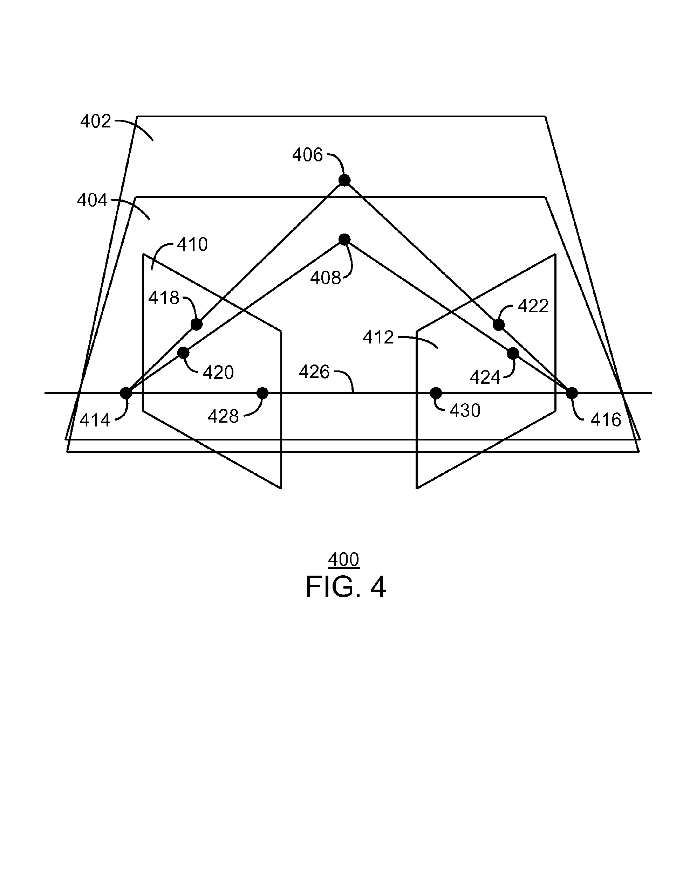

Fig. 4 illustrates a 3-D arrangement 400 used for explaining the disclosed method and system, in accordance with an embodiment of the present invention. Specifically, the figure provides spatial details outlining geometrical constraints entailed by the above process of adjusting multiple cameras for obtaining properly justified/rectified stereo images.

Specifically, the arrangement 400 includes an image plane 410 and a focal point 414 as an abstraction of a left camera, an image plane 412 and a focal point 416 as an abstraction of a right camera, a first object point 406 assumed to be lying on a first light plane 402, and a second object point 408 assumed to be lying on a second light plane 404. The first object point 406 is being depicted in the left camera as an effigy 418 on that camera's image plane 410, and is depicted in the right camera as an effigy 422 on that camera's image plane 412. Analogously, the second object point 408 is being depicted in the left camera as an effigy 420 on that camera's image plane 410, and is depicted in the right camera as an effigy 424 on that camera's image plane 412. Additionally, the focal point 416 of the right camera is being depicted on the image plane 410 of the left camera as an effigy 428, and, vice versa, the focal point 414 of the left camera is being depicted on the image plane 412 of the right camera as an effigy 430.

The two cameras are positioned slightly off-set relative to one another so that each of the cameras acquires images of the object points 406 and 408 from a different perspective. Specifically, the left camera is positioned such that its image plane 410 is positioned slightly to the left of the object points 406 and 408. The right camera is positioned such that its image plane 412 is disposed slightly to the right of the object points 406 and 408. Again, for simplicity, physical components of the first and second cameras are not illustrated.

Specifically, in the arrangement shown in Fig. 4, application of the method according to the invention has achieved that the focal points 414, 416 of the left and right camera both lie on the intersection line 426 that is defined by the intersection between the first and second light planes 402, 404. Because of this arrangement, the intersection line 426 is coincident with the epipolar line of the arrangement, which is known to be defined as the connecting line between the mutual effigies of the focal points of the two cameras. With other words, the intersection of the light planes 402 and 406 defines an intersection line 426 connecting the focal points 414 and 416 of the two cameras. The intersection line 426 also includes image points 428 and 430, being those points on the image planes 410 and 412 onto which the focal point of the respective other camera is imaged.

Essentially, the arrangement 400 describes the spatial correspondence existing between the real objects and the optical elements acquiring images of those objects. Particularly, the arrangement 400 illustrates the geometrical constraints imposed on the optical elements for achieving, for example, proper rectification and justification of stereo images obtained by two cameras. Those skilled in the art will appreciate that these constraints may manifest, for example, when using the optical set-up 200, e.g., Figs. 2A-2D, in which both outer cameras 202 and 206 acquire an image similar to that shown by the image 306 of Fig. 3.

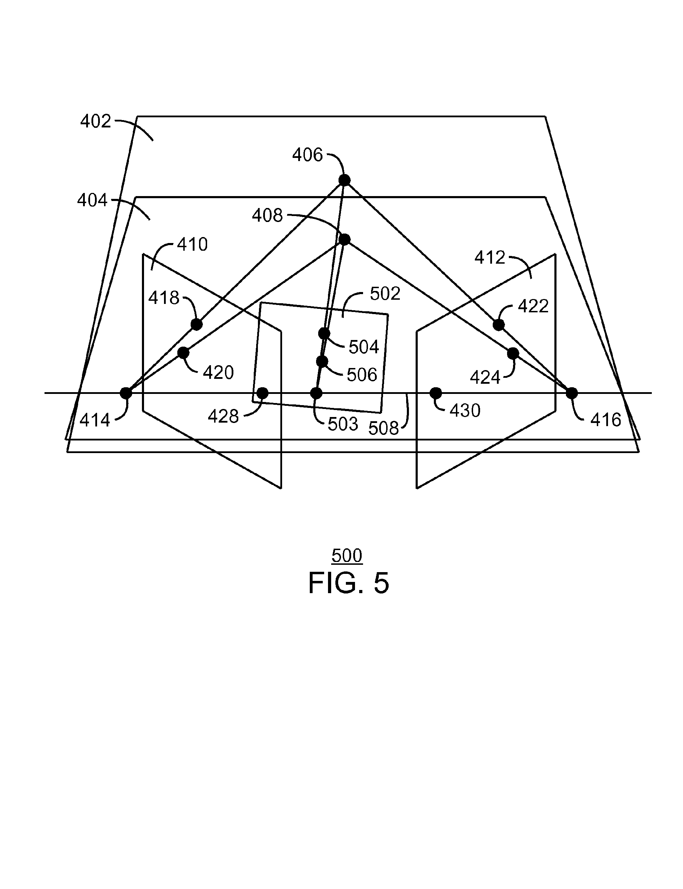

Still, further in accordance with other aspects of the present technique it may also be desirable to obtain stereo images by three cameras, as discusses above. Accordingly, Fig. 5 illustrates another 3-D arrangement 500 used for illustrating the disclosed method and system, in accordance with an embodiment of the present technique. As illustrated with the embodiment of Fig. 4, the arrangement 500 similarly depicts all the elements associated with the first and second cameras and their corresponding planes, focal points and the real object points 406 and 408. In addition to these elements, the arrangement 500 further introduces a third camera adapted for obtaining images of the real points 406 and 408 as well. In so doing, the construction 500 exemplifies the geometrical constraints desired for obtaining properly justified stereo images acquired by three cameras.

More specifically and as illustrated by the Fig. 5, a third camera having an image plane 502 and a focal point 503 is disposed such that it may acquire images of the real objects 406 and 408. The real points 406 and 408 are imaged on the image plane 502 of the third camera as image points or effigies 504 and 506. In a preferred embodiment, once justification is achieved between images acquired by the first and second cameras, then justification between images acquired by all three cameras is achieved when the third camera with the image plane 502 is further adjusted so that its focal point 503 falls along the straight line 508. The straight line 508 is analogous to the line 426 shown in Fig. 4, in that it defines the intersection of the planes 402 and 404 and, thus, includes all focal points 414, 416, and 503 of all three cameras.

Alternatively, rather than initially positioning the first and second cameras into place and only, thereafter, adjusting the third camera, other embodiments of the present invention may achieve proper justification by simultaneously adjusting all three cameras so that all the focal points fall on the straight line 508. Again, those skilled in the art will appreciate that the constraints illustrated by the construction 500 for achieving proper justification could be implemented by using the optical set-up 200, e.g., Figs. 2A-2D, in which the three cameras 202-206 acquire images of the lines being coincident with the spots across a grid and background, as similarly shown by the image 306 of Fig. 3.

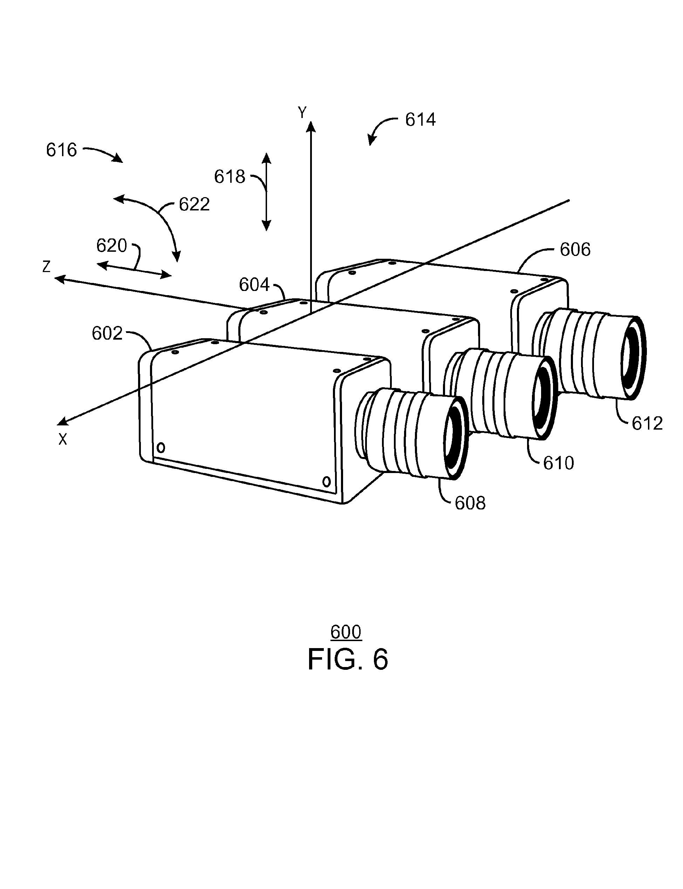

Fig. 6 is a perspective view of an image acquisition system 600, in accordance with an embodiment of the present invention. The acquisition system 600 is adapted for acquiring stereo images, such as those discussed with reference to Fig. 1 and 3. Further, the image acquisition system 600 may be configurable, for example, by the above described method and system for acquiring properly justified stereo images. The image acquisition system 600 includes three cameras, namely, cameras 602, 604, and 606, where each of the aforementioned cameras includes one or more lenses, indicated by reference numerals 608, 610, and 612, respectively. Each of the cameras 602-606 may further include additional optical, electrical and/or electro-optical elements, i.e., CCDs, processors, and/ or other elements adapted for acquiring and processing digital video and/or still images. Thus, the cameras 602-606 may be similar to the cameras 202-206 described above with reference to Figs 2A-2D.

Further, the cameras 602-606 may generally be disposed parallel to one another along a coordinate system 614 having x, y and z axes. Particularly, in the illustrated embodiment, the cameras 602-606 are positioned such that the lenses 608-612 and their associated lines of sight are directed in parallel to the z-axis, thereby defining the image planes of the cameras 602-606 along the x-y plane. As discussed above with reference to Figs. 4 and 5, the acquisition of properly justified images may depend on the manner by which the three cameras 602-26 are positioned relative to one another so that the focal points of the cameras become collinear. In accordance with the present technique, by using two lasers for projecting light planes across a grid and background, e.g., Figs 2 and 3, image justification can be achieved by first adjusting the outer cameras 602 and 606 so that each of those two cameras obtains an image where the straight lines appearing across the background spatially coincide with the bright spots appearing across the grid, as illustrated by image 306 of Fig. 3. Thereafter, the third camera 604 may be positioned and adjusted so that it, too, obtains an image where the straight lines and bright spots coincide, as given by the image 306. In so doing, the third camera 604 may be spatially adjusted, for example, by displacing it within the y-z plane 616. Particularly, the camera 604 may be adjusted along a vertical direction given by arrow 618, or the camera 604 can be adjusted along a horizontal direction, as shown by arrow 620. The camera may further be given additional degrees of freedom so that it can rotate along a direction given by arrow 622, or the camera 604 can be adjusted in directions given by combinations of the above-described movements.

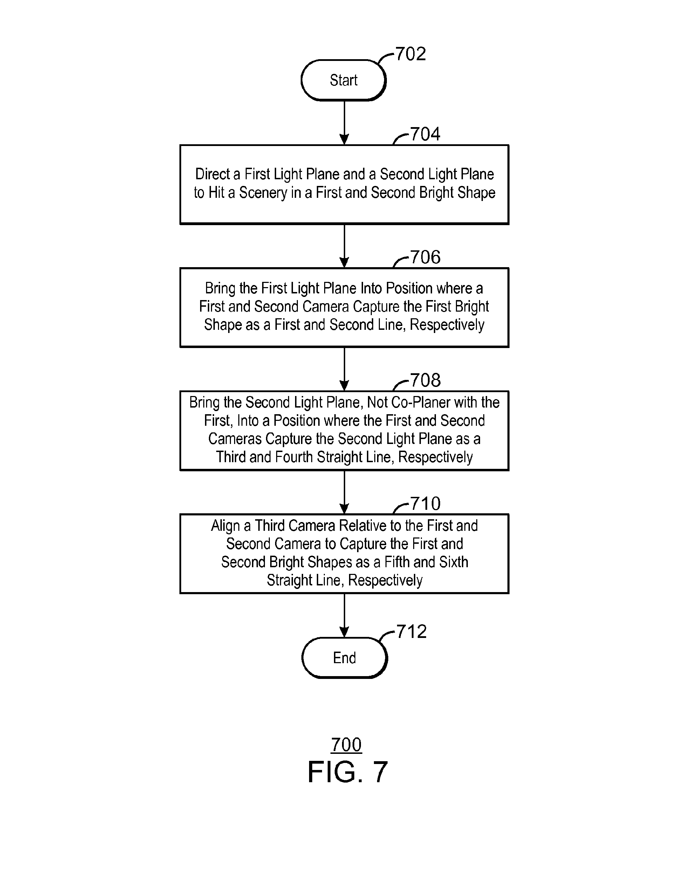

Fig. 7 is a block diagram 700 of a process flow, in accordance with the present invention. Accordingly, the block diagram 700 provides a method for adjusting an optical system, such as one formed of multiple cameras, adapted for acquiring properly adjusted stereo images. The process flow 700 may be carried out using an optical set-up having scenery adapted to receive and project laser light viewable by optical systems. Accordingly, the process flow 700 may be implemented by employing some or all of the elements described above with reference to Figs. 2-6, or equivalents thereof.

The block diagram 700 begins a block 702 from which the block diagram advances to block 704. At block 704 the process flow 700 employs two light sources for directing a first light plane to hit a scenery in a first bright shape, as well as, directing a second light plane to hit a scenery in a second bright shape. In accordance with an exemplary embodiment of the present technique, one of the light planes emitted by one of the light sources, e.g., a laser, is projected above the optical axis of the optical system, so that the laser light appears on the top portion of the scenery, while the second laser light is projected so that it appears on the bottom portion of the scenery. From block 704, the process flow 700 proceeds to block 706 to bring the first light plane into a position where a first camera captures the first bright shape as a first straight line and a second camera captures the first bright shape as a second straight line. In so doing, the first and second cameras of the optical system are adjusted so that those acquire images of the first light planes. Thereafter, the process flow proceeds to block 708 to bring the second light plane into a position not coplanar with the first light plane, where the first camera captures the second bright shape as a third straight line and the second camera captures the second bright shape as a fourth straight line. Thus, during the aforementioned step, the first and second camera of the optical system may further be adjusted so those acquire the images of the second laser line. Accordingly, when this is achieved, images of the first, second, third, and fourth lines acquired by the two cameras, respectively, are said to be adjusted.

Thereafter, the process flow 700 advances to block 710, so as to align a third camera so as to achieve a viewable image in which the two light planes appear on the scenery. The third camera is further adjusted into a position relative to the first camera and the second camera such that the third camera captures the first bright shape as a fifth straight line and the second bright shape as a sixth straight line. Hence, when all cameras satisfy the above criterion, then the focal points of all three cameras are said to fall on a single straight line. This ensures that images acquired by the three cameras display proper adjustment. Finally, the process flow ends a block 712.

One of ordinary skill will appreciate that combining any of the above-recited features of the present invention together may be desirable.

## Claims

1. A method (700) for collinearly aligning focal points of multiple cameras, comprising:
directing (704) a first light plane to hit a non-flat
scenery in a first bright shape; directing a second light plane to hit the scenery in a second bright shape;
bringing (706) the first light plane into a position
where a first camera captures the first bright shape as a first straight line and a second camera captures the first bright shape as a second straight line;
bringing (708) the second light plane into a position
not coplanar with the first light plane, where the first camera captures the second bright shape as a third straight line and the second camera captures the second bright shape as a fourth straight line; and followed by
aligning (710) a third camera into a position relative
to the first camera and the second camera such that the third camera captures the first bright shape as a fifth straight line and the second bright shape as a sixth straight line.

2. The method (700) according to claim 1, forming the non-flat scenery to be comprised of a grid that is positioned in front of a background, and wherein the first bright shape and the second bright shape each comprises bright spots on the grid and a curve on the background.

3. The method (700) according to claim 2, wherein each step of capturing a respective bright shape as a straight line comprises capturing the bright spots of the respective bright shape as coinciding with the curve of the respective bright shape.

4. The method (700) according to any of claims 1-3,
wherein the multiple cameras are positioned side-by-side, an origin of the first light plane is positioned above the multiple cameras, and an origin of the second light plane is positioned below the multiple cameras.

5. A system (200) for collinearly aligning focal points of multiple cameras, comprising:
a first light source (210) generating a first light
plane hitting a non-flat scenery (208) in a first bright shape;
a second light source (212), arranged at a distance
from the first light source, generating a second light plane not co-planar with the first light plane and hitting the scenery in a second bright shape;
a first (202), second (204), and third camera (206)
arranged to capture the scenery (208) and at least parts of the first bright shape and the second bright shape;
means (214) for changing the position and orientation
of the first light source;
means for changing the position and orientation of the second light source; and
means (215) for dislocating the third camera.

6. The system (200) according to claim 5, wherein the scenery comprises a grid positioned in front of a background, wherein the first and second light sources project the first and second light planes onto the grid and the background behind the grid, and where the first bright shape and the second bright shape each comprise bright spots on the grid and a curve on the background.

7. The system (200) according to claim 5, wherein the first, second, and third cameras are positioned horizontally side-by-side, the first light source is positioned above the cameras, and the second light source is positioned below the cameras.
